# EUROPEAN PATENT APPLICATION

(11) **EP 4 345 049 A1**
(43) Date of publication of application: **03.04.2024**
(21) Application number: 23199382.5
(22) Date of filing: 25.09.2023
(51) Int. Cl.: B66C 1/10, B60P 3/40, F03D 13/40, B65D 88/12, B65D 88/52, B66C 1/24

(54) **LIFTING YOKE**

(30) Priority: 27.09.2022 DK PA202200874
(71) Applicant: Danhydra A/S, 7400 Herning (DK)
(72) Inventor: Petersen, Anders, Bøgelund, 7100 Vejle (DK)
(74) Representative: Larsen & Birkeholm A/S

(57) **Abstract**

The present invention relates to a lifting device comprising a lifting yoke for windmill blade. In particular the present invention relates to a lifting device which is easy to transport and bring into position for the actual lifting operation.

In particular, the invention relates to a lifting device comprising a lifting yoke (1) comprising fastening means (2) connecting to a crane during operation, a support element (4, 5, 6) comprising a support surface (5) dimensioned to support an area of a unit to be lifted, connecting means (3) securing the lifting yoke (1) to the support element (4, 5, 6) during operation, and at least a part of the support element (4, 5, 6) comprises a transport frame (4) corresponding to a lower frame of a container such as a standard container. The lifting device comprises a packed state and an operational state, and in the packed state the components of the lifting device (1, 2, 3, 5, 6) are configured to fit within the dimensions of a container such as a standard container, and in the operational state the components of the lifting device (1, 2, 3, 5, 6) are configured to operate as a lifting device.

## Description

The present invention relates to a lifting device comprising a lifting yoke for windmill blade. In particular the present invention relates to a lifting device which is easy to transport and bring into position for the actual lifting operation.

### Background of the invention

To avoid the need of working at heights and to manually handling of slings it is known to use lifting yokes when positioning e.g. blades of wind turbines high above ground or sea level.

WO 2017/108053 A1 relates to a lifting apparatus (10) for a wind turbine blade (2), which apparatus comprising a cradle (12) for carrying a said blade, and a lifting yoke (14) which may be operated by a crane when lifting the cradle. The lifting yoke is mounted to the cradle and is moveable in a lengthwise direction relative to the cradle to permit adjustment of the orientation of the cradle when the yoke is suspended from a lifting point associated therewith. The apparatus may in particular be used for lifting and manoeuvring wind turbine blades which are long and heavy and difficult to move between sites.

DK 2019/70639 A1 relates to a wind turbine blade support apparatus (20) for supporting a portion of an elongated wind turbine blade. The support apparatus (20) comprises a support element (206, 207), and a liner (202, 203) mounted to it, the liner being adapted to contact a wind turbine blade (18) and thereby conform to a portion of a surface of the blade, the apparatus being arranged to provide a variable fixed topography during use of the liner in which the liner (202, 203) has a first, conformable state and a second, non-conformable state; said liner (202, 203) in said first state thereof being conformable to acquire the topography of a portion of a surface of a said wind turbine blade when the blade is supported by or on said first support element (206, 207), and wherein said liner (202, 203), in said second, nonconformable state thereof maintains a fixed topography.

WO 2006/016851 A1 relates to a lifting apparatus (40) to be suspended from a crane in order to lift a freight device (10). The lifting apparatus comprises a body (45) having a first (70) and second portion (50) a crane attachment assembly (60) for attaching the first portion (70) of the body (45) to the crane, a selectively releasable engagement means attached to the second portion (50) of the body (45) for engaging the freight device (10) said engagement means including a sleeve having an internal face corresponding in shape to a cone (55) attached to the freight device (10) through attachment means (90) and a selectively releasable locking mechanism for locking the sleeve to the cone. However, there are no directions in respect of how this tool may be transported in a single container.

Hence, an improved lifting yoke results in reduced installation time and easier transport, and therefore reduced costs in connection with the lifting of blades or similar long and heavy units.

### Summary of the invention

Thus, an object of the present invention is to provide a lifting device comprising a lifting yoke configured to lift an object which lifting device is easy to transport to the site for lifting i.e. the operational site.

One aspect of the invention relates to a lifting device comprising a lifting yoke (1) comprising fastening means (2) connecting to a crane during operation, a support element (4, 5, 6) comprising a support surface (5) dimensioned to support an area of a unit to be lifted, connecting means (3) securing the lifting yoke (1) to the support element (4, 5, 6) during operation, at least a part of the support element (4, 5, 6) comprises a transport frame (4) such as the lower frame of a container or corresponding to the lower frame of a container, wherein the lifting device has a packed state and an operational state, in the packed state the components of the lifting device (1, 2, 3, 5, 6) are configured to fit within the dimensions of a standard container. A transport frame is part of or constitutes a support used when transporting the lifting device from e.g. a packing area where the lifting device is in the packed state, to an operational site where the lifting device is in the operational state and to be used for lifting. The transport frame (4) not only provides support during operation but also provides support during transport of the lifting device. The transport frame may comprise or be constituted of a part of a container such as a bottom frame of a container or at least the transport frame correspond to the bottom frame of a container.

According to any embodiment of the first aspect, the support element (4, 5, 6) may further comprise one or more supporter(s) (6) each comprising a support surface (5). The size and shape of the supporter(s) (6) and form of the support surface(s) (5) may be configured to fit to a unit to be lifted to prevent damaging the surface of the unit during lifting and to prevent the unit to be lifted from falling of the supporter(s) during operation.

According to any embodiment of the first aspect, the connecting means (3) may comprise a first attachment end (7) and a second attachment end (8) which first and second attachment ends are positioned opposite each other, and the second attachment end (8) is secured to the support element (4, 5, 6), and the connecting means (3) may be in at least two positions, a packed position where the first attachment end (7) rests against or is secured to the support element (4, 5, 6) and an operational position where the first attachment end (7) is secured to the lifting yoke (1).

According to any embodiment of the first aspect, the transport frame (4) may have at least two states, a packed state and an operational state, and the transport frame (4) is longer in the operational state than in the packed state. According to this embodiment, at least one part of the transport frame (4) may be pivoted from a vertical position into a horizontal position thereby extending the length of the transport frame (4).

According to any embodiment of the first aspect, the connecting means (3) may be C-shaped i.e. the connecting means (3) may comprise at least three parts, a top part (a) comprising the first attachment end (7), a lower part (c) comprising the second attachment part (8), and a middle part (b) constituting a rigid connection between one end of the top part (a) and one end of the lower part (c).

According to any embodiment of the first aspect, the lifting device may further comprise a counter ballast (9).

According to any embodiment of the first aspect, the connecting means (3) may in the operational position be secured in the operational position by locking means (10).

According to any embodiment of the first aspect, the lifting device may fit within the dimensions of a standard container in form of a 40 ft container with the outer dimensions 12.2 m x 2.44 m x 2.60 m, and normally having a maximum weight of 30.000 kg. However, there are other standard sized containers and a lifting device according to the invention may be fitted into such other standard containers, a skilled person only needs to know the dimensions of the standard container. In the packed state the lifting device may include the lifting yoke (1), the fastening means (2), the connecting means (3), the support unit(s) (6) and optional units like counter ballast (9), and the elements constituting the lifting device may be placed inside a container of which the transport element 4 may constitute the bottom or be positioned on the transport frame (4) and extend within the dimensions of a container such as a standard container.

According to any embodiment of the first aspect, the support element (4, 5, 6) comprising the support surface (5) may be configured to support a unit being 10 to 60 meters long and/or weighting between 2.000 and 12.000 kg, such as a blade or part of a blade of a wind turbine.

### Brief description of the figures

Figure 1 shows an embodiment of a lifting device in a packed state,
Figure 2 shows the same embodiment of a lifting device as shown in fig. 1 in a state where the ends of the container has been laid down,
Figure 3 shows the same embodiment of a lifting device as shown in fig. 1 in a state where units have been moved from their packed position to intermediary or final positions, and
Figure 4 shows the same embodiment of a lifting device as shown in fig. 1 in an operational state.

### Detailed description of the invention

### Definitions

Prior to discussing the present invention in further details, the following terms and conventions will first be defined:
*In general* - When this expression is used it indicates that the described feature may be used with all embodiments of the invention. However, it should be noted that embodiments and features described in the context of one of the aspects of the present invention also apply to the other aspects of the invention unless it is particularly pointed to that it does not.

The present invention relates to a lifting device which is suitable for supporting and lifting a unit which may be 10 to 60 meters long and weight between 2.000 and 12.000 kg, the unit may be a blade or part of a blade of a wind turbine.

A lifting device according to the invention comprises a lifting yoke 1 comprising fastening means 2 configured to connect to a crane or similar machine, generally equipped with a hoist rope, wire ropes or chains, and sheaves, that can be used both to lift and lower the unit and to move the unit horizontally.

The lifting device also comprise a support element 4, 5, 6 on which support element the unit to be lifted rests during operation. The support element comprises one or more supporters 6 each comprising a support surface 5 dimensioned to support an area of the unit to be lifted and further the support element comprises a transport frame 4. Further, the lifting device comprises connecting means 3 securing the lifting yoke or lifting beam 1 to the support element 4, 5, 6 during operation.

An advantage of the lifting device of the present invention is that the lifting device constituted at least of the above-mentioned elements may be packed in a standard container or the elements may be stacked or packed so that they take up space equivalent to a standard container before and after use, thereby making it easy to transport the lifting device to a position of use. Especially, the transport frame 4 may correspond to the lower frame of a container such as a standard container and the elements may be equipped with demountable walls or the transport frame 4 may be equipped with means for fastening a tarpaulin covering the lifting device during transport.

The connecting means 3 comprises a first attachment end 7 and a second attachment end 8 which first and second attachment ends are positioned opposite each other. During operation, the second attachment end 8 is secured to the transport frame 4 and the first attachment end 7 is secured to the lifting yoke 1.

In general, the connecting means 3 may be positioned in at least two positions relative to the transport frame 4, a packed position where the lifting device is in a packed state where the first attachment end 7 is resting against or is secured to the transport frame 4, and an operational position where the first attachment end 7 is secured to the lifting yoke 1.

In general, the connecting means 3 may be overall C-shaped i.e. the connecting means 3 comprises three sides or parts, a top part (a) comprising the first attachment end 7, a lower part (c) comprising the second attachment part 8, and a middle part (b) constituting a rigid connection between one end of the top part (a) and one end of the lower part (c), i.e. the connecting means 3 has an opening through which a unit to be lifted may enter the central part of the connecting means 3. The three sides or parts of the embodiment shown in the figures are straight i.e. the three parts constitute three sides in a rectangle, however, the three parts need not be straight, they may be rounded i.e. constitute lines of a circle or oval, and the three parts need not be joint at right angles but may be joint at an angle smaller or larger than 90°.

The second attachment end 8 of the connecting means 3 may be secured to the transport frame 4 by a pivotal connection, i.e. a hinged joint, allowing the connection means 3 to pivot between a packed position and an operational position. Alternatively, the second attachment end 8 of the connecting means 3 may rest against the transport frame 4 - directly or indirectly - or is fastened to the transport frame 4 by a fitting in a more horizontal and packed state and then then raised to a more vertical and operational state where it still rests against the transport frame 4 and is fastened either by the same or a second fitting.

In the operational position, the connecting means 3 may be secured by locking means 10 e.g. in the form of stiffeners fastened to respectively the top part (a) or an upper part of the middle part (b) of the connecting means 3 and the transport frame 4 of the support element. According to an embodiment, the locking means 10 unfold or extends automatically when the connecting means 3 are brought from the packed to the operational position, alternatively, the locking means 10 may be positioned manually.

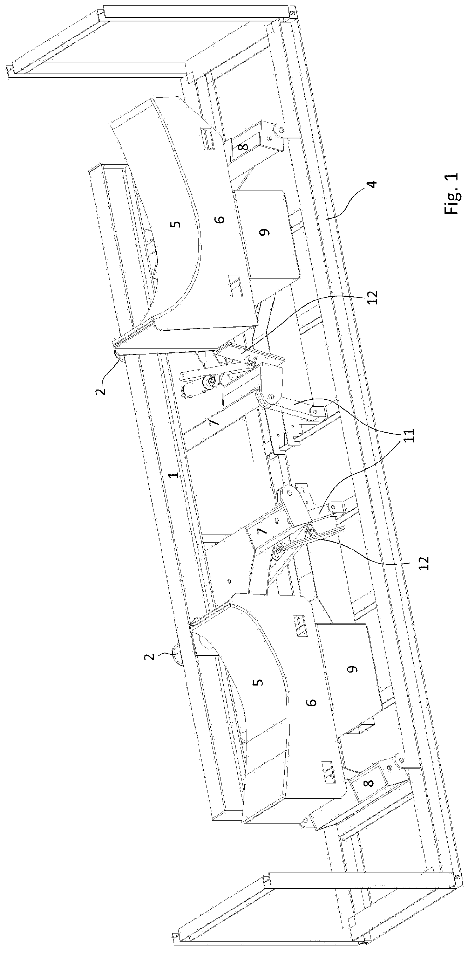

In general, the lifting device may comprise gripping members 12 designed to exercise a pressure on a unit to be lifted during operation. The gripping members 12 may be mounted/fixed to the lifting device and may have at least two positions, a first position where the gripping members 12 allow free access of the unit to be lifted through the open side of the connecting means 3, and a second position where the gripping members 12 exercise a pressure on the unit to be lifted or in a different way prevent the unit to be lifted from falling out or being removed through the open side of the connecting means 3. According to the embodiment of figs. 1-4, the gripping means 12 are part of and pivotally mounted relative to the second attachment end 8 of the connecting means 3, and the gripping members 12 may be pivoted from a first position where the gripping members 12 are positioned close to and parallel to the second attachment end 8 to a the second position where the gripping member 12 is angled relative to the second attachment end 8 and push against the unit to be lifted.

The transport frame 4 of the support element may have at least two states, a packed state and an operational state. In the packed state a part of the lower frame 4 may constitute the ends 4a, 4b of a container holding the lifting device, and the ends of the container 4a, 4b holding the lifting device in a packed state may constitute extensions of the transport frame 4 in an operational state. In this case the transport frame 4 may be longer in the operational state than in the packed state.

At least one extension 4a, 4b of the transport frame 4 may be pivoted or slided from a vertical position into a horizontal position thereby extending the length of the transport frame 4.

To balance the unit to be lifted, the lifting device may comprise one or more counter ballast(s) 9 normally mounted to the transport frame 4 with an arm 13. The one or more counter ballast 9 may also fit into a container holding the lifting device in the packed state. Normally the weight of the counter ballast 9 as well as the length of the arm 13 is adapted to the unit to be lifted by the lifting device.

In a packed state the components constituting the lifting device may fit into a standard container such as a 40 ft container having the outer dimensions 12.2 m x 2.44 m x 2.60 m, and the lifting device may have a weight below the maximum weight of 30.000 kg normally allowed in such a standard container.

Fig. 1 shows the lifting device in a packed state in which state the lifting device normally arrives at an operation site. The embodiment of the packed lifting device shown in fig. 1, device comprises a lifting yoke 1, a support element comprising a transport frame 4, two supporters 6 each comprising a support surface 5 dimensioned to support an area of a part to be lifted, two counter ballasts 9 comprising each an arm 13 and two connecting means 3 to secure the lifting yoke 1 to the support element 4, 5, 6 during operation.

In fig. 1, the lifting device is shown in a packed position where two counter ballast 9 are placed on top of the transport frame 4, one at each end mirroring each other. The two connecting means 3 are also placed one at each end of the transport frame 4 mirroring each other and the lower part c of each connecting means 3 comprising the second attachment end 8 rests against the transport frame 4 and might be bolted to the transport frame 4 or fastened to the transport frame 4 in another way during transport. The top part a of each connecting means 3 comprising the first attachment end 7 rests on top of the arm 13 of the counter ballast 9 and may be fastened to the transport frame 4 during transport via one or more contact parts 11. The two supporters are 6 are placed on each a counter ballast 9. The lifting yoke 1 is placed on top of the connecting means 3 beside the supporters 6 and extending over the middle of the container. The ends of the container 4a and 4b are positioned vertically.

As the heavy and compact components of the lifting device i.e. the supporters 6, the connecting means 3 and the counter ballasts 9, comes in pairs which are placed symmetrically inside the container, the standard container is well-balanced and may easily be lifted with a crane although it weighs between 25 and 30 tons.

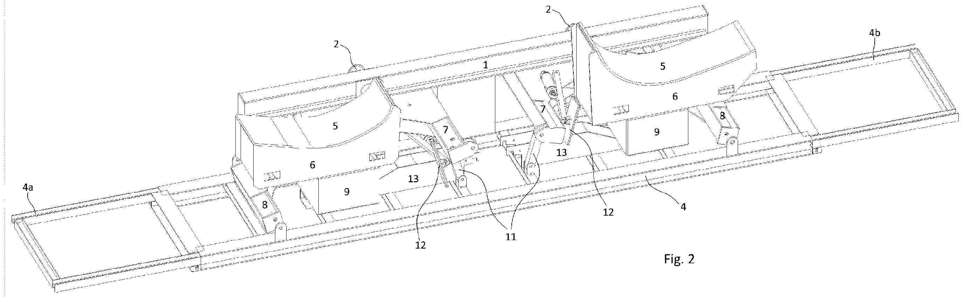

First state of bringing the lifting device to an operational state may be to remove the top and side walls of the container. In fig. 1, the top and side walls have been removed and in fig. 2 the two end walls 4a, 4b have been folded/pivoted to a horizontal position and secured in this position. Alternatively, the end walls 4a, 4b may be completely removed.

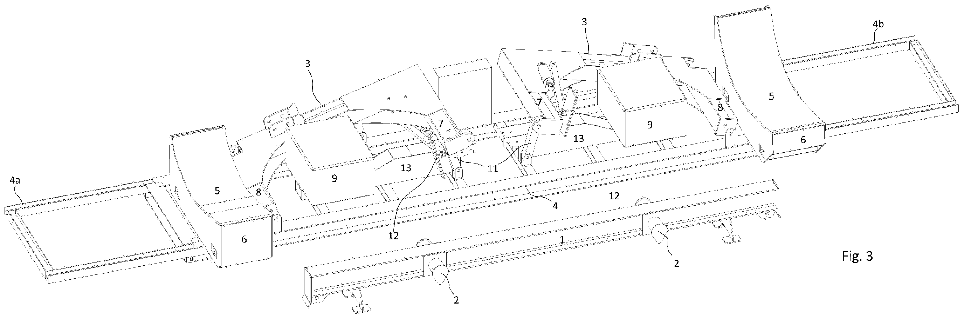

In fig. 3, the lifting yoke 1 has been removed from the position of the packed state and rests on the ground while the other components are being rearranged to obtain the operational state of the lifting device. This includes moving the supporters 6 to a position beside the connecting means 3 where the supporters 6 are secured to the transport frame 4. The support surface 5 and the size of each supporter 6 varies because each support surface 5 and supporter 6 is fitted to a specific area of the unit to be lifted.

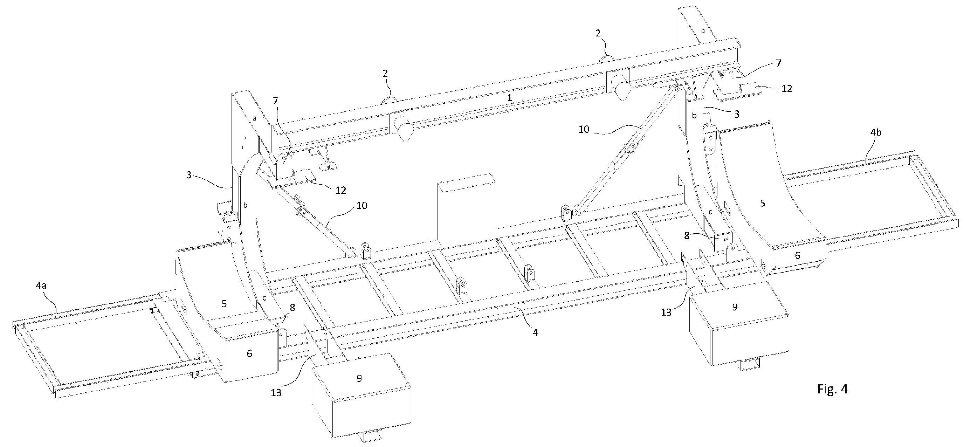

In fig. 4, the connecting means 3 has been lifted to a vertical position and the first attachment end 7 has been secured to the transport frame 4, the locking means 10 in form of straight, rigid stiffeners may unfold automatically when the connecting means 3 are raised to the vertical position, and the stiffeners 10 will then further secure the upright position of the connecting means 3. The stiffeners may be secured e.g. by pins/bolts in the operational state. The counter ballasts 9 have been lifted from the packed state position where they rested directly on the transport frame 4, to an operational position where the counter ballasts 9 are fastened to the transport frame 4 via the arm 13 and extends from the side of the lower frame 4 keeping the lifting device in balance during operation. The weight and position of the counter ballasts 9 is adapted to the size and the weight of the unit to be lifted. At last, the lifting yoke 1 is attached to the second attachment end 8 of the connecting means 3 providing fastening means 2 for a crane or similar machine.

| **Ref. no.** | **Ref. name** |
|---|---|
| 1 | Lifting yoke / lifting beam |
| 2 | Fastening means |
| 3 | Connecting means |
| a, b, c | a: top part of connecting means, b: middle part of connecting means, c: lower part of connecting means |
| 4 | Transport frame of support part |
| 4a, 4b | Ends of container / extensions of transport frame |
| 5 | Support surface |
| 6 | Supporters / cradles |
| 7 | First attachment end of connecting means |
| 8 | Second attachment end of connecting means |
| 9 | Counter ballast |
| 10 | Locking means / stiffeners |
| 11 | Contact part |
| 12 | Gripping member |
| 13 | Arm of counter ballast |

## Claims

1. A lifting device comprising
- a lifting yoke (1) comprising fastening means (2) connecting to a crane during operation,
- a support element (4, 5, 6) comprising a support surface (5) dimensioned to support an area of a unit to be lifted,
- connecting means (3) securing the lifting yoke (1) to the support element (4, 5, 6) during operation, and
at least a part of the support element (4, 5, 6) comprises a transport frame (4) corresponding to a lower frame of a container such as a standard container,
**characterized in that** the lifting device comprises a packed state and an operational state, and in the packed state the components of the lifting device (1, 2, 3, 5, 6) are configured to fit within the dimensions of a container such as a standard container, and in the operational state the components of the lifting device (1, 2, 3, 5, 6) are configured to operate as a lifting device.

2. A lifting device according to any previous claim, wherein the support element (4, 5, 6) further comprises one or more supporter(s) (6) each comprising a support surface (5).

3. A lifting device according to any previous claim, wherein the connecting means (3) comprises a first attachment end (7) and a second attachment end (8) which first and second attachment ends are positioned opposite each other, and the second attachment end (8) is secured to the support element (4, 5, 6), and the connecting means (3) comprises at least two positions, a packed position where the first attachment end (7) rests against or is secured to the support element (4, 5, 6) and an operational position where the first attachment end (7) is secured to the lifting yoke (1).

4. A lifting device according to any previous claim, wherein the transport frame (4) has at least two states, a packed state and an operational state, and the transport frame (4) is longer in the operational state than in the packed state.

5. A lifting device according to claim 4, wherein at least one part of the transport frame (4) may be pivoted from a vertical position into a horizontal position thereby extending the length of the transport frame (4).

6. A lifting device according to any previous claim, wherein the connecting means (3) are C-shaped i.e. the connecting means (3) comprises at least three parts, a top part (a) comprising the first attachment end (7), a lower part (c) comprising the second attachment part (8), and a middle part (b) constituting a rigid connection between one end of the top part (a) and one end of the lower part (c).

7. A lifting device according to any previous claim, wherein the lifting device further comprises a counter ballast (9).

8. A lifting device according to any previous claim, wherein the connecting means (3) in the operational position are secured in the operational position by locking means (10).

9. A lifting device according to any of the previous claims, wherein the lifting device fit within the dimensions of a standard container in form of a 40 ft container with the outer dimensions 12.2 m x 2.44 m x 2.60 m, and normally having a maximum weight of 30.000 kg.

10. A lifting device according to any of the previous claims, wherein the support element (4, 5, 6) comprising the support surface (5) is/are configured to support a unit being 10 to 60 meters long and/or weighting between 2.000 and 12.000 kg, such as a blade or part of a blade of a wind turbine.
